(19) **Europäisches Patentamt**
**European Patent Office**
**Office européen des brevets**

(11) **EP 1 258 735 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
**G01S 17/10** *(2006.01)* **G01S 7/497** *(2006.01)*

(21) Anmeldenummer: **02005599.2**

(22) Anmeldetag: **12.03.2002**

(54) **Verfahren zur Abstandsmessung mittels Laufzeitmessung von Laserimpulsen für Fahrzeuge**

Method for measuring distance using time-of-flight measurement of laser pulses for vehicles

Procédé de mesure de la distance par mesure de temps de vol des impulsions laser pour véhicules

(84) Benannte Vertragsstaaten:
**DE ES FR GB IT SE**

(30) Priorität: **27.03.2001 DE 10115152**

(43) Veröffentlichungstag der Anmeldung:
**20.11.2002 Patentblatt 2002/47**

(73) Patentinhaber: **Hella KGaA Hueck & Co.**
**59552 Lippstadt (DE)**

(72) Erfinder: **Schellmann, Michael**
**59872 Meschede (DE)**

(56) Entgegenhaltungen:
**EP-A- 1 176 430 EP-A1- 1 195 617**
**DE-A- 2 723 835 DE-A- 19 607 345**
**US-A- 4 111 552**

**Beschreibung**

Die Erfindung bezieht sich auf ein Verfahren zur Abstandsmessung mittels Laufzeitmessung von Laserimpulsen. Eine Messanordnung (Abstandssensor) zur Durchführung dieses Verfahrens ist zum Beispiel in der DE 30 20 996 A1 beschrieben. Der Laserimpuls wird von einem Halbleiterlaser als Sender mit vorgeschaltetem Pulsgenerator erzeugt. Der vom Ziel, dessen Abstand zum Fahrzeug bestimmt werden soll, reflektierte Laserimpuls wird von einer Fotodiode, vorzugsweise einer Avalanche-Fotodiode, mit nachgeschalteter Laufzeitmeß-Schaltung zeitlich detektiert. Zwischen dem Einschalten (Triggern) des Pulsgenerators zum Zeitpunkt $T_0$ und dem Aussenden des Laserimpulses zum Zeitpunkt $T_S$ als dem eigentlichen Startsignal liegt jedoch eine Verzögerungszeit $\Delta T = T_S - T_0$. Dabei hängt die Verzögerungszeit hauptsächlich von den verwendeten Bauteilen ab, insbesondere vom verwendeten Pulsgenerator, wobei auch die Wahl des Halbleiterlasers eine Rolle spielt. Wäre diese Verzögerungszeit konstant, dann wäre sie unkritisch, da man sie einmal bestimmen und dann bei der Laufzeitmessung als Korrekturwert berücksichtigen könnte. Dies ist allerdings nicht der Fall, da diese Verzögerungszeit sich insbesondere bei Temperaturschwankungen stark ändern kann. So kann die Verzögerungszeit über den bei Fahrzeugen relevanten Temperaturbereich bei Verwendung bestimmter Bauteile zwischen 100 und 200 Nanosekunden liegen, was eine Schwankung von 100 Nanosekunden bedeutet. Damit wäre der Startzeitpunkt und damit die Laufzeitmessung um 100 Nanosekunden ungenau, was letztendlich eine Ungenauigkeit für die Abstandsmessung von 15 m bedeuten würde.

Aus diesem Grunde wird in der DE 30 20 996 A1 vorgeschlagen, einen Teil des Laserimpulses über einen Lichtleiter in Richtung auf die Empfangsdiode als Referenz-Startsignal auszukoppeln. Das Vorsehen eines Lichtleiters für diesen Zweck ist jedoch sehr aufwendig und teuer.

Aus der DE 197 31 754 A1 ist die Integration des vorstehend beschriebenen Abstandssensors im Scheinwerfer eines Fahrzeuges beschrieben. Das Problem der genauen Startzeitermittlung für die Laufzeitmessung wird dort jedoch nicht angesprochen.

Aufgabe der Erfindung ist es, ein Verfahren zur Abstandsmessung mittels Laufzeitmessung von Laserimpulsen für Fahrzeuge zu schaffen, dass in einfacher, kostengünstiger und zuverlässiger Weise eine Korrektur der Verzögerungszeit zwischen dem Triggern des Pulsgenerators und dem Lichtaustrittszeitpunkt des Laserimpulses ermöglicht.

Zur Lösung dieser Aufgabe wird der Umstand ausgenutzt, dass bei der Integration eines Abstandssensors der vorstehend genannten Art in einen Scheinwerfer, der Laserimpuls durch die für die Laserstrahlung transparente Abschlussscheibe (auch Streuscheibe genannt) hindurch treten muß. Für die Erfindung ist nun die Abschlussscheibe nicht lediglich ein transparentes Designelement - wie im Fall der DE 197 31 754 A1. Vielmehr wird erfindungsgemäß die Erkenntnis ausgenutzt, dass die Abschlussscheibe nur nahezu völlig transparent für die Laserstrahlung ist, d.h. ein geringer Teil des Laserimpulses wird von der Abschlussscheibe zurück in den Scheinwerfer reflektiert. Dieser von der Abschlussscheibe reflektierte Teil des Laserimpulses erreicht - wie Messungen gezeigt haben - bei entsprechender Strahlungscharakteristik (leicht divergentem Laserstrahl) und ausreichender räumlicher Nähe zwischen Sendelaser und Empfangsdiode auch die Empfangsdiode. Indem nun der von der Abschlussscheibe reflektierte Teil des Laserimpulses zeitlich detektiert wird, kann der Aussendezeitpunkt des Laserimpulses (Zeitpunkt des Aufblitzen des Lasers) exakt bestimmt werden, da der vom reflektierten Laserstrahl zurückgelegte Weg vom Sendelaser über die Abschlussscheibe zur Empfangsdiode aufgrund der festen geometrischen Anordnung immer gleich ist.

Falls die Reflexion an der Abschlussscheibe bei Verwendung einer gewöhnlichen Abschlussscheibe nicht ausreichend hoch ist, so ist es in einer Ausführungsform vorgesehen, ein Abschlussscheibe zu verwenden, die zur Erzielung einer erhöhten Reflexion eines Teils des Laserimpulses zumindest lokal reflektierend ausgebildet ist.

Alternativ oder zusätzlich zu dieser Maßnahme ist es in einer Ausführungsform vorgesehen, die Empfindlichkeit des Empfängers innerhalb eines bestimmten Zeitfensters zu erhöhen, um den Empfang eines an der Abschlussscheibe reflektierten Signals mit geringer Intensität zu detektieren.

Die der Erfindung zugrunde liegende Idee ist nicht auf die Integration des Laserabstandssensors in einem Scheinwerfer begrenzt. Die Grundidee besteht vielmehr darin, den Bauraum, in dem der Abstandssensor angeordnet ist, mit einer für die Laserstrahlung (nur) nahezu transparenten Abschlußwandung zu versehen, wobei dann die Laufzeit eines von der Abschlußwandung zum Empfänger reflektierten Teils des Laserimpulses als Referenzzeitsignal für die Abstandsmessung ermittelt wird. Im allgemeinen, wenn die Laserwellenlänge außerhalb des sichtbaren Spektralbereichs liegt, muß die Abschlußwandung nicht transparent für sichtbares Licht sein. Die Abschlußwandung dient dazu, den Abstandssensor vor Schmutzwasser, Staub, Steinschlag etc. zu schützen. Damit ist dann beispielsweise die Integration des Abstandssensors in die Stoßstange eines Fahrzeuges möglich.

Anhand der beiden beigefügten Zeichnung soll die Erfindung näher erläutert werden.

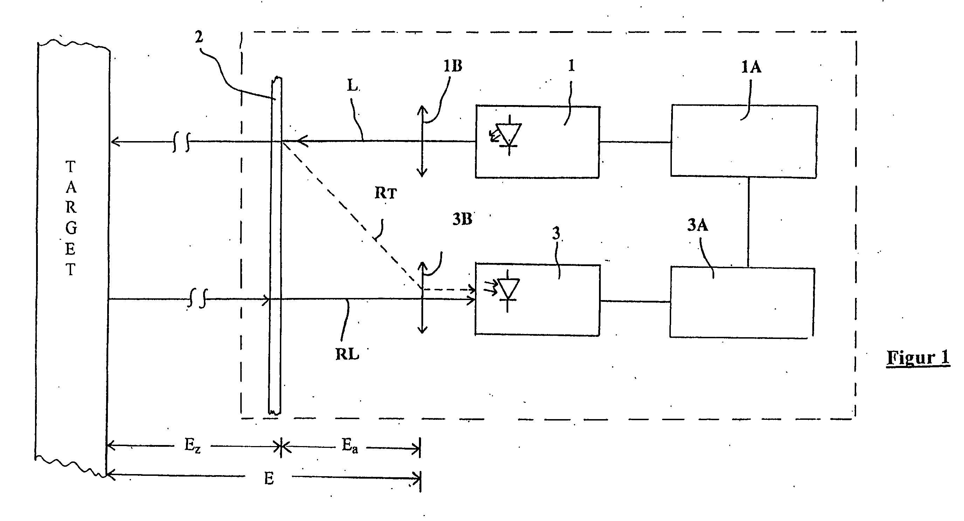

In Figur 1 ist schematisch die Messanordnung zur Abstandsbestimmung dargestellt, mit der das erfindungsgemäße Verfahren durchgeführt wird. Die gestrichelte Linie stellt den Scheinwerfer dar, in dem die Messanordnung integriert ist. Die Messanordnung (Abstandssensor) besteht aus einem Halbleiterlaser als Sender (1) für den Laserimpuls, dessen Laufzeit bei Reflexion an einem Ziel (Target) zur Abstandsbestimmung gemessen wird. Dem Halbleiterlaser (1) ist ein Pulsgenerator (1A) zur vorgeschaltet. Hinter dem eigentlichen Halbleiterlaser (1) befindet sich eine Auskoppellinse (1B), wobei Halbleiterlaser (1) und Auskoppellinse (1B) vorzugsweise eine Einheit bilden, die als Sender (1) zu bezeichnen ist. Auf seinem Weg zum Ziel, z.B. ein vorausfahrendes Fahrzeug, muß der Laserimpuls die Abschlussscheibe (2) passieren. Dabei wird die Entfernung zwischen der Auskoppellinse (1B) des Senders (1) und der Abschlussscheibe (2) als $E_a$ bezeichnet. Der vom Ziel reflektierte Laserimpuls muß nun seinerseits die Abschlussscheibe (2) passieren und gelangt dann über eine Einkoppellinse (3B) in die Empfangsdiode (3). Auch hier bilden Einkoppellinse (3B) und Empfangsdiode (3) vorzugsweise eine Einheit. Der Empfangsdiode (3) ist eine Schaltung (3A) zur Laufzeitmessung nachgeschaltet.

Die Arbeitsweise der Messanordnung ist nun folgende:

Der Pulsgenerator (1A) erzeugt zum Zeitpunkt $T_0$ ein Triggersignal, wodurch der Halbleiterlaser (1) gestartet wird. Das Triggersignal dient gleichzeitig der Aktivierung der Laufzeitmessung. Bildlich gesprochen wird die interne Uhr der Laufzeitmeß-Schaltung (3A) auf Null gestellt und eingeschaltet. Mit einer gewissen zeitlichen Verzögerung tritt dann der Laserimpuls zum Zeitpunkt $T_S$ aus dem Sender (1) aus. Zum Zeitpunkt Ta, wird dann der von der Abschlussscheibe (2) reflektierte Teil (RT) des Laserimpulses (L), der in die Empfangsdiode (3) gelangt ist, von der Laufzeitmeß-Schaltung (3A) detektiert. Eine gewisse Zeit ($T_Z$) später wird dann das vom Ziel reflektierte Signal (RL) detektiert.

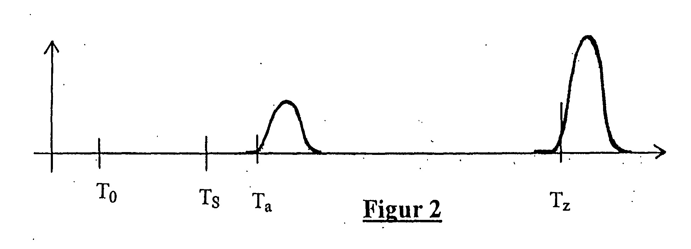

Der zeitliche Ablauf und die Signalverläufe, die von der Laufzeitmeß-Schaltung (3A) aufgenommen wurden, sind in Figur 2 dargestellt. Wie deutlich zu erkennen ist, ist die Amplitude des von Abschlussscheibe (2) reflektierten Signals (RT) wesentlich geringer als die Amplitude des vom Ziel reflektierten Signals (RL). In der dargestellten Ausführungsform ist in der Laufzeitmeß-Schaltung (3A) ein Schwellwert (Triggerschwelle) gespeichert, wobei die Signale detektiert werden, wenn die Amplitude diesen Schwellwert überschritten hat. In einer nicht dargestellten, bevorzugten Ausführungsform werden die Signale über eine Sample-and Hold-Schaltung abgetastet und anschließend das Signalmaximum bzw. der Schwerpunkt des Signalverlaufs ermittelt. Darüber hinaus sind dem Fachmann weitere Auswerteverfahren geläufig.

Die Entfernung zwischen der Abschlussscheibe (2) und dem Ziel ist in Figur 1 als $E_z$ bezeichnet. Die Entfernung zwischen dem Sender (1) bzw. dessen Auskoppellinse (1B) und dem Ziel ist als $E$ bezeichnet.

Für die zu bestimmende Zielentfernung gilt nun folgender Zusammenhang:

$$\text{I.} \quad E_z = \tfrac{1}{2}\,(T_Z - T_S)\,c - E_a$$

Der Faktor ½ resultiert aus der Tatsache, dass der reflektierte Laserimpuls die doppelte Entfernung zurückgelegt hat. Die Größe $c$ entspricht der Lichtgeschwindigkeit. Dabei ist die Größe $T_S$ - der Zeitpunkt des Austritts der Laserimpulses - allerdings nur ungenau bestimmt.

Diese Ungenauigkeit wird nun eliminiert, indem die Laufzeit Ta des von der Abschlussscheibe reflektierten Teils () des Laserimpulses als Referenzzeit gemessen wird, d.h. die Zeit, die der Laserimpuls für die Zurücklegung der immer gleichen Strecke $E_a$ vom Sender (1) zur Abschlussscheibe (2) benötigt:

$$\text{II.} \quad E_a = \tfrac{1}{2}\,(T_a - T_S)\,c$$

Durch Substitution der beiden Gleichungen erhält man eine Beziehung für die Zielentfernung, in der die ungenaue Größe $T_S$ nicht mehr enthalten ist:

$$\text{III.} \quad E_z = \tfrac{1}{2}\,(T_Z - T_a)\,c$$

Während des Betriebs erzeugt der Abstandssensor periodisch Laserimpulse, um fortlaufend die Entfernung zu vor dem Fahrzeug befindlichen Zielen (vorausfahrende Fahrzeuge, Hindernisse, Fahrbahnbegrenzungen etc.) zu bestimmen. Dabei ist es nicht notwendig, dass bei jedem Laserimpuls auch der an der Abschlussscheibe (2) reflektierte Teil (RT) des Laserimpulses als Referenzsignal gemessen wird. Hier reicht es aus, wenn diese Referenzmessungen nur nach gewissen Zeitabständen oder nach einer gewissen Anzahl von Laserimpulsen erfolgt.

**Patentansprüche**

**Patentansprüche für folgende(n) Vertragsstaat(en): DE, FR, GB, IT**

1. Verfahren zur Abstandsmessung mittels Laufzeitmessung von Laserimpulsen für Fahrzeuge mit einem Abstandssensor bestehend aus

   - einem Sender (1) mit vorgeschaltetem Pulsgenerator (1A) zur Erzeugung der Laserimpulse (L),
   - einem Empfänger (3) mit nachgeschalteter Laufzeitmeß-Schaltung (3A) zur Detektion des von einem Ziel reflektierten Laserimpulses (RL),

**dadurch gekennzeichnet, dass**

- für den Einbauraum, in dem der Abstandssensor angeordnet ist, eine für die Laserstrahlung nur nahezu völlig transparente Abschlußwandung (2) verwendet wird, welche dazu dient, den Abstandssensor vor Schmutzwasser, Staub, Steinschlag etc. zu schützen,
- wobei die Laufzeit eines von der Abschlußwandung (2) zum Empfänger (3) reflektierten Teils (RT) des Laserimpules (L) als Referenzzeitsignal für die Abstandsmessung ermittelt wird, und wobei

die Abschlußwandung (2) von der Abschlußscheibe eines Scheinwerfers gebildet wird.

**2.** Verfahren nach Anspruch 1,
**dadurch gekennzeichnet, dass**
die Empfindlichkeit des Empfängers (3) innerhalb eines bestimmten Zeitfensters erhöht wird, um ein an der Abschlußwandung (2) reflektiertes Signal mit geringer Intensität zu detektieren.

**Patentansprüche für folgende(n) Vertragsstaat(en): ES, SE**

**1.** Verfahren zur Abstandsmessung mittels Laufzeitmessung von Laserimpulsen für Fahrzeuge mit einem Abstandssensor bestehend aus

- einem Sender (1) mit vorgeschaltetem Pulsgenerator (1A) zur Erzeugung der Laserimpulse (L),
- einem Empfänger (3) mit nachgeschalteter Laufzeitmeß-Schaltung (3A) zur Detektion des von einem Ziel reflektierten Laserimpulses (RL),

**dadurch gekennzeichnet, dass**
für den Einbauraum, in dem der Abstandssensor angeordnet ist, eine für die Laserstrahlung nur nahezu völlig transparente Abschlußwandung (2) verwendet wird, welche dazu dient, den Abstandssensor vor Schmutzwasser, Staub, Steinschlag etc. zu schützen,
wobei die Laufzeit eines von dieser Abschlußwandung (2) zum Empfänger (3) reflektierten Teils (RT) des Laserimpules (L) als Referenzzeitsignal für die Abstandsmessung ermittelt wird.

**2.** Verfahren nach Anspruch 1,
**dadurch gekennzeichnet, dass**
die Empfindlichkeit des Empfängers (3) innerhalb eines bestimmten Zeitfensters erhöht wird, um ein an der Abschlußwandung (2) reflektiertes Signal mit geringer Intensität zu detektieren.

**3.** Verfahren nach Anspruch 1 oder 2,
**dadurch gekennzeichnet, dass**
die Abschlußwandung (2) von der Abschlußscheibe eines Scheinwerfers gebildet wird.

**Claims**

**Claims for the following Contracting State(s): DE, FR, GB, IT**

**1.** Method of measuring distances by measuring the travel time of laser pulses in vehicles equipped with a distance sensor comprising

- a transmitter (1) with an upstream pulse generator (1A) for generating the laser pulses (L),
- a receiver (3) with a downstream travel time measuring circuit (3A) for detecting the laser pulse reflected by a target (RL),

**characterized in that**

- a terminating wall (2) is used for terminating the cavity that the distance sensor is installed in such that said terminating wall (2) is only almost entirely transparent to the laser beam, said terminating wall (2) being intended to protect the distance sensor against waste water, dust, stone-chippings, etc., wherein the travel time of the component (RT) of the laser pulse (L) reflected by the terminating wall (2) to the receiver (3) is computed as a reference time signal for distance measurement, and wherein the terminating wall (2) consists of the cover lens of a headlamp.

**2.** Method of claim 1,
**characterized in that**
the sensitivity of the receiver (3) is increased within a specified time slot in order to detect a low-intensity signal reflected by the terminating wall (2).

**Claims for the following Contracting State(s): ES, SE**

**1.** Method of measuring distances by measuring the travel time of laser pulses in vehicles equipped with a distance sensor comprising

- a transmitter (1) with an upstream pulse generator (1A) for generating the laser pulses (L),
- a receiver (3) with a downstream travel time measuring circuit (3A) for detecting the laser pulse reflected by a target (RL),

**characterized in that**

a terminating wall (2) is used for terminating the cavity that the distance sensor is installed in such that said terminating wall (2) is only almost entirely transparent to the laser beam, said terminating wall () being intended to protect the distance sensor against waste water, dust, stone-chippings, etc., wherein the travel time of the component (RT) of the laser pulse (L) reflected by said terminating wall (2) to the receiver (3) is computed as a reference time signal for distance measurement.

2. Method of claim 1,
   **characterized in that**
   the sensitivity of the receiver (3) is increased within a specified time slot in order to detect a low-intensity signal reflected by the terminating wall (2).

3. Method of claim 1 or claim 2,
   **characterized in that**
   the terminating wall (2) consists of the cover lens of a headlamp.

## Revendications

**Revendications pour l'(les) Etat(s) contractant(s) suivant(s): DE, FR, GB, IT**

1. Procédé de mesure de l'écartement par mesure de la durée des impulsions laser pour des véhicules équipés d'un capteur d'écartement comprenant

   - un émetteur (1) avec un générateur d'impulsions (1A) installé en amont pour la production des impulsions laser (L),
   - un récepteur (3) avec un circuit de mesure de la durée (3A) installé en aval pour la détection de l'impulsion laser réfléchie par une cible (RL),

   **caractérisé en ce qu'**une paroi de terminaison (2) n'étant qu'en partie totalement transparente pour le rayonnement laser est utilisée pour l'espace de montage dans lequel se trouve le capteur d'écartement, cette paroi servant à protéger le capteur d'écartement contre l'eau sale, la poussière, les gravillons, etc., la durée d'une partie (RT) de l'impulsion laser (L) réfléchie par la paroi de terminaison (2) vers le récepteur (3) étant déterminée comme signal de temps de référence pour la mesure de l'écartement et la paroi de terminaison (2) étant formée par la glace externe d'un projecteur.

2. Procédé selon la revendication 1,
   **caractérisé en ce que** la sensibilité du récepteur (3) est augmentée à l'intérieur d'une fenêtre de temps pour détecter un signal de faible intensité réfléchi sur la paroi de terminaison (2).

**Revendications pour l'(les) Etat(s) contractant(s) suivant(s): ES, SE**

1. Procédé de mesure de l'écartement par mesure de la durée des impulsions laser pour des véhicules équipés d'un capteur d'écartement comprenant

   - un émetteur (1) avec un générateur d'impulsions (1A) installé en amont pour la production des impulsions laser (L),
   - un récepteur (3) avec un circuit de mesure de la durée (3A) installé en aval pour la détection de l'impulsion laser réfléchie par une cible (RL),

   **caractérisé en ce que**
   une paroi de terminaison (2) n'étant qu'en partie totalement transparente pour le rayonnement laser est utilisée pour l'espace de montage dans lequel se trouve le capteur d'écartement, cette paroi servant à protéger le capteur d'écartement contre l'eau sale, la poussière, les gravillons, etc., la durée d'une partie (RT) de l'impulsion laser (L) réfléchie par cette paroi de terminaison (2) vers le récepteur (3) étant déterminée comme signal de temps de référence pour la mesure de l'écartement.

2. Procédé selon la revendication 1,
   **caractérisé en ce que**
   la sensibilité du récepteur (3) est augmentée à l'intérieur d'une fenêtre de temps pour détecter un signal de faible intensité réfléchi sur la paroi de terminaison (2).

3. Procédé selon la revendication 1 ou 2,
   **caractérisé en ce que**
   la paroi de terminaison (2) est formée par la glace externe d'un projecteur.

**Figur 1**

1A

3A

1

3

1B

3B

L

RT

RL

E

$E_a$

$E_z$

2

TARGET

$T_0$ $T_S$ $T_a$ **<u>Figur 2</u>** $T_z$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3020996 A1

- DE 19731754 A1